# EUROPEAN PATENT SPECIFICATION

(11) **EP 4 633 926 B1**
(45) Date of publication and mention of the grant of the patent: **23.09.2026**
(21) Application number: 23829141.3
(22) Date of filing: 12.12.2023
(51) Int. Cl.: B29C 65/36, B29C 65/78

(54) **TOOLING FOR USE IN A METHOD FOR JOINING CONTACTED SURFACES OF MOLDED PARTS BY ELECTROMAGNETIC WELDING, AND METHOD FOR JOINING THE MOLDED PARTS**
WERKZEUG ZUR VERWENDUNG IN EINEM VERFAHREN ZUM VERBINDEN VON KONTAKTIERTEN OBERFLÄCHEN VON FORMTEILEN DURCH ELEKTROMAGNETISCHES SCHWEISSEN SOWIE VERFAHREN ZUM VERBINDEN DER FORMTEILE
OUTILLAGE DESTINÉ À ÊTRE UTILISÉ DANS UN PROCÉDÉ D'ASSEMBLAGE DE SURFACES EN CONTACT DE PIÈCES MOULÉES PAR SOUDAGE ÉLECTROMAGNÉTIQUE, ET PROCÉDÉ D'ASSEMBLAGE DES PIÈCES MOULÉES

(30) Priority: 16.12.2022 NL 2033742
(43) Date of publication of application: 22.10.2025
(73) Proprietor: Kve Composites B.V., 2497 GB Den Haag (NL)
(72) Inventor: LABORDUS, Maarten, 2497 GB THE HAGUE (NL); DE BRUIN, Alexander, 2497 GB THE HAGUE (NL); BRUIJKERS, Michiel Hendrik Paul, 2497 GB THE HAGUE (NL); WIRTZ, Thomas, 2497 GB THE HAGUE (NL); MITROUSIAS, Alexander, 2497 GB THE HAGUE (NL); SCHUTTE, Rutger, 2497 GB THE HAGUE (NL); TSIANGOU, Eirini, 2497 GB THE HAGUE (NL); SEEHUSEN, Guy, 2497 GB THE HAGUE (NL)
(74) Representative: Arnold & Siedsma
(86) International application number: PCT/NL2023/050653
(87) International publication number: WO 2024/128912

(56) References cited:
- EP-A1- 3 772 406
- WO-A1-2020/130806

## Description

### TECHNICAL FIELD OF THE INVENTION

The present invention relates to a tooling for use in a method for joining contacted surfaces of molded parts by electromagnetic welding. Furthermore, the present invention relates to a method for manufacturing a tooling for use in a method for joining contacted surfaces of molded parts by electromagnetic welding. The present invention also relates to a method for joining contacted surfaces of molded parts by electromagnetic welding.

### BACKGROUND OF THE INVENTION

A number of technologies exist for joining molded parts, for instance fiber reinforced thermoplastic or thermosetting composite parts. Mechanical fastening and adhesive bonding are traditionally used to join two contact surfaces of the molded parts. However, both mechanical fastening and adhesive bonding appear to be costly and time consuming. Mechanical fastening for instance requires expensive hole locating, drilling, shimming, and fastener installation, while adhesive bonding requires complicated surface pre-treatments that may involve chemical substances.

Electromagnetic welding may eliminate the use of separate fasteners and potentially offers the ability to join contact surfaces of molded composite parts at relatively high speeds and little, if any, pre-treatments. Electromagnetic welding generates an electromagnetic field in an induction-sensitive component of one or more of the molded parts to heat a thermally activated coupling means of the molded part(s) to above a melting temperature of the coupling means. The contact surfaces of the molded parts are joined to each other by the molten coupling means. The coupling means may for instance be a thermoplastic resin of one or more of the parts to be joined, or may be a separately applied thermoplastic resin. For welding thermoplastic and thermoset molded parts together, the thermoplastic resin that the induction-sensitive component melts may function as a hot melt adhesive for instance.

A number of welding methods are available for creating a welded connection between molded parts such as fiber reinforced composite molded parts. In vibration welding the reinforcing fibers may be damaged by the movement, and ultrasonic welding is less suitable for continuous welding for instance. Known methods of electromagnetic welding may produce joined products of inferior quality, particularly in high-grade applications in which relatively high mechanical strength and load-bearing capacity of the welded connection is desired, such as in the aviation industry.

To be able to achieve an adequate quality weld with electromagnetic welding, it is generally required to apply sufficient pressure on the contacted surfaces of the molded parts that need to be connected by welding. The state-of-the-art method of applying pressure to the contacted surfaces is generally based on the use of inflatable elements that transfer pressure on the components. Typical state of the art inflatable elements comprise silicone hoses that radially expand when inflated. Applying uniform pressure on a flat laminate is however not possible using these hoses, since more pressure is built up in the middle of the hoses than at their edges. Furthermore, in case of tightly arranged assemblies of composite parts, there may not be enough room to provide a hose in such assemblies, let alone in a small radius section thereof and build up sufficient pressure. Also, the all-round pressure build-up in state-of-the-art methods may also provide such high forces in other directions that said tooling may be pushed away from where pressure is to be applied to the contacted surfaces.

EP3772406A1 provides systems and methods for induction welding, among which a method for induction welding a composite part.

WO2020/130806A1 describes a tooling for use in a method for electromagnetic welding of two contacted surfaces of molded parts, comprising a rubber body and pressurizing means for pressurizing the rubber body and applying pressure to the contacted surfaces. The rubber body comprises an embedded stiff body shaped such as to define different rubber body thicknesses in different directions, which causes a different pressure build-up in said different directions.

### SUMMARY OF THE INVENTION

It is an object of the present invention to provide an improved tooling for use in a method for joining contacted surfaces of molded parts by electromagnetic welding, in particular a tooling that overcomes at least part of the above-mentioned problems of the state of the art.

The invention provides for this purpose a tooling for use in a method for joining contacted surfaces of molded parts by electromagnetic welding in accordance with claim 1. The tooling comprises a rigid body and a pad of elastomeric material arranged on an outer surface portion of the rigid body. A peripheral edge of the pad is attached to the outer surface portion of the rigid body. The rigid body comprises a channel fluidly communicating a space between the rigid body and the pad with an outlet of fluid pressure generating means to be connected to the channel to build up pressure in the space and thereby increase the volume of the space and push the pad outwardly relative to the outer surface portion of the rigid body so as to apply pressure to the contacted surfaces using the tooling. In contrast to state-of-the-art inflatable silicone hoses, the elastomeric pressure-applying pad arranged locally on a portion of the outer surface of the rigid body allows for locally applying a uniform pressure on a flat laminate. Specifically, this configuration allows for applying sufficient pressure on composite parts to be welded of relatively tightly arranged composite part assemblies. For the sake of completeness, it is noted that the tooling according to the invention can be dimensioned in accordance with the dimensions of the parts to be welded. Due to the anisotropic pressure build-up between the elastomeric pad and the rigid body and the fact that the rigid body can be easily fixated with respect to the parts to be welded, it is ensured that the tooling according to the invention stays in place while applying pressure to the contacted surfaces. **In** other words, the tooling according to the invention allows for applying pressure during welding in tight confinements while ensuring positioning of the part to be welded.

**In** an embodiment of the invention, a tooling is provided wherein the peripheral edge of the pad and an outer edge of the outer surface portion of the rigid body are configured to be detachably connected to each other, such that a connection between the pad near its peripheral edge and the outer surface portion of the rigid body is fluid-tight, at least when the fluid pressure generating means push the pad outwardly relative to the outer surface portion of the rigid body. **In** other words, the pad and the outer surface portion are configured such that fixation and self-sealing of the pad is ensured while the fluid exerts pressure on the pad.

The peripheral edge of the pad and an outer edge of the outer surface portion of the rigid body may be configured to engage each other to form a form-fitting connection so as to connect the pad in a fluid-tight manner to the outer surface portion.

**In** a preferred embodiment, the pad is configured along its peripheral edge such that it enfolds the outer edge of the outer surface portion of the rigid body.

**In** a particularly preferred embodiment, the pad comprises along its peripheral edge an inwardly extending lip portion which engages a correspondingly formed outwardly extending lip portion along the outer edge of the outer surface portion of the rigid body.

**In** a preferred embodiment, the outer surface portion comprises a recess in an outer face of the rigid body, which recess is dimensioned and formed such that it forms a counter form for the pad, wherein the pad is arranged in the recess. The recess prevents that the pad may shift or stretch laterally when a force is applied perpendicular to the pad, e.g., when one of the molded parts is pressed against the other one using the pad and the fluid pressure generating means.

Preferably, an outwardly facing surface of the pad is coplanar with an outwardly facing surface of a non-recessed portion of the outer face of the rigid body. This contributes to preventing any lateral shift or lateral stretch of the pad.

The pad may comprise a recessed portion which is dimensioned and formed such that it forms a counter form for a portion of one of the molded parts, said portion of one of the molded parts comprising one of the contacted surfaces. In this way, said one of the molded parts can be embedded in the pad, as it were, so as to be surrounded by pad material in order to prevent so-called squeeze-out of resin and/or fibers or the like of said one of the molded parts.

Preferably, a depth of the recessed portion of the pad equals the thickness of said portion of one of the molded parts, such that an outwardly facing surface of said portion of one of the molded parts is coplanar with an outwardly facing surface of a non-recessed portion of the pad. This allows to bring said one of the molded parts into contact with both the pad and the other molded part with which said one of the molded parts is to be joined without needing to generate fluid pressure below the pad, while at the same time preventing squeeze-out as much as possible.

The outer surface portion of the rigid body may comprise an outer surface of a rigid insert arranged on a bottom surface of the recess of the rigid body. Preferably, the peripheral edge of the pad and an outer edge of the rigid insert are configured to engage each other to form a form-fitting connection so as to connect the pad in a fluid-tight manner to the outer surface portion. The rigid insert inter alia allows to arrange the pad on the outer surface portion by casting elastomeric pad material in liquid form over the rigid insert and inside the recess such that the rigid insert is immersed and thus surrounded by the elastomeric material. In such case, i.e., when the elastomeric material is poured into the recess and over the insert, the outer or peripheral edge of the rigid insert is preferably formed such that the elastomeric material after solidification thereof engages the peripheral edge of the rigid insert such that a form-fitting connection is obtained between the pad and the rigid insert which connects the pad to the insert in a fluid-tight manner to the outer surface portion. In other words, the peripheral edge of the rigid insert is thus designed such that it ensures self-sealing and fixation of the elastomeric pad with respect to the rigid insert, without needing to further attach and seal the pad after solidification of the elastomeric material inside the recess. Preferably, the rigid insert is designed such that elastomeric pad comprises, after solidification, along its peripheral edge an inwardly extending lip portion which engages a correspondingly formed outwardly extending lip portion along the outer edge of the rigid insert. In a preferred embodiment, a fluid tight seal is arranged between the rigid insert and the bottom surface of the recess of the rigid body. Preferably, the seal comprises an O-ring.

In a preferred embodiment, the rigid insert comprises a channel which is part of the channel which fluidly communicates the space between the rigid body and the pad with the outlet of fluid pressure generating means to be connected to the channel. Preferably, the channel of the rigid insert fluidly communicates a space between a pad facing surface of the rigid insert and the pad with the outlet of fluid pressure generating means so as to build up pressure in said space and thereby increase the volume of the space and push the pad outwardly relative to the pad facing surface of the rigid insert so as to apply pressure to the contacted surfaces using the tooling.

Preferably, the rigid body further comprises a vacuum chamber fluidly communicating an exterior of the rigid body with an inlet of vacuum suction means to be connected to the vacuum chamber, the vacuum chamber being spatially separated from the pad and configured to create a vacuum, using the vacuum suction means, between rigid body and one of the molded parts so as to fixate said one of the molded parts onto the rigid body. Alternatively, the tooling may further comprise a mechanical fixation member configured for mechanically fixing said one of the molded parts onto the rigid body.

**In** a preferred embodiment, the pad has a substantially uniform thickness. This allows for generating a uniform pressure on the contacted surfaces across the surface area of the pad. Preferably, the elastomeric material of the pad comprises polymerized siloxane.

**In** a preferred embodiment, the fluid pressure generating means comprise air pressure generating means. Preferably, the rigid body is made from a polymeric material. Manufacturing the rigid body from a polymeric material instead of metal heating of the rigid body is prevented Furthermore, the tooling may further comprise at least one of a pressure sensor and a temperature sensor configured to measure at least one of a pressure and a temperature, respectively, applied to the contacted surfaces.

According to a second aspect, the present invention provides for a method for manufacturing a tooling for use in a method for joining contacted surfaces of molded parts by electromagnetic welding. The method comprises manufacturing a pad of elastomeric material to be arranged on an outer surface portion of a rigid body of the tooling and configured to be pushed outwardly relative to the outer surface portion of the rigid body by fluid pressure so as to apply pressure to the contacted surfaces using the tooling. Manufacturing the pad comprises providing a dummy part having a shape and dimensions corresponding to that of one of the molded parts, and casting elastomeric material around a portion of the dummy part that corresponds to a portion of said one of the molded parts, said portion of said one of the molded parts comprising one of the contacted surfaces. The step of casting is performed such that a surface of the dummy part which corresponds to said one of the contacted surfaces is not covered with the elastomeric material. **In** this way, a pad of elastomeric material can be obtained in which said one of the molded parts can be embedded, as it were, so as to be surrounded by pad material while joining the contacted surface by electromagnetic welding, in order to prevent so-called squeeze-out of resin and/or fibers or the like of said one of the molded parts.

In a preferred embodiment, the method further comprises providing the rigid body, and arranging the pad of elastomeric material on the outer surface portion of the rigid body, including attaching a peripheral edge of the pad to the outer surface portion. The method further comprises providing a channel in the rigid which fluidly communicates a space between the rigid body and the pad with an outlet of fluid pressure generating means to be connected to the channel to build up pressure in the space and thereby increase the volume of the space and push the pad outwardly relative to the outer surface portion of the rigid body so as to apply pressure to the contacted surfaces using the tooling. In contrast to state-of-the-art inflatable silicone hoses, the elastomeric pressure-applying pad arranged locally on a portion of the outer surface of the rigid body allows for locally applying a uniform pressure on a flat laminate. Specifically, this configuration allows for applying sufficient pressure on composite parts to be welded of relatively tightly arranged composite part assemblies. For the sake of completeness, it is noted that the method or manufacturing the tooling according to the invention allows for dimensioning the tooling (and pad) in accordance with the dimensions of the parts to be welded. Due to the anisotropic pressure build-up between the elastomeric pad and the rigid body and the fact that the rigid body can be easily fixated with respect to the parts to be welded, it is ensured that the tooling according to the invention stays in place while applying pressure to the contacted surfaces. In other words, with the method according to the invention a tooling can be obtained with which pressure can be applied during welding in tight confinements while ensuring positioning of the part to be welded.

In a further preferred embodiment, manufacturing the pad of elastomeric material and arranging the pad of elastomeric material on the outer surface portion of the rigid body comprises providing a recess in an outer face of the rigid body and providing a rigid insert inside the recess, wherein the recess and the rigid insert form the outer surface portion. The method further comprises providing the elastomeric material in fluid form and filling the recess with the elastomeric material by pouring the elastomeric material in fluid form into the recess, such that the rigid insert is completely immersed. After that, the portion of the dummy part that corresponds to the portion of said one of the molded parts is arranged in the fluid elastomeric material, such that a surface of the dummy part which corresponds to said one of the contacted surfaces is not covered with the elastomeric material, wherein said portion of said one of the molded parts comprises one of the contacted surfaces. Finally, the fluid elastomeric material is cured inside the recess.

Alternatively, the method may comprise providing a mold comprising an interior cavity which has the counter-shape of the pad of elastomeric material to be manufactured. **In** this embodiment, instead of (i) providing the elastomeric material in fluid form and filling the recess with the elastomeric material by pouring the elastomeric material in fluid form into the recess, such that the rigid insert is completely immersed, (ii) arranging the portion of the dummy part that corresponds to the portion of said one of the molded parts in the fluid elastomeric material, such that a surface of the dummy part which corresponds to said one of the contacted surfaces is not covered with the elastomeric material, and (iii) curing the fluid elastomeric material inside the recess, the mold is filled with the elastomeric material and cured therein. Thereto, the shape and dimensions of the cavity of the mold correspond to those of the recess of the rigid body on the hand, and to said portion of said one of the molded parts on the other. Preferably, an inwardly protruding surface of a closing lid of the mold may have the shape and dimensions of said portion of said one of the molded parts.

The rigid insert is shaped such that it enables the peripheral edge of the pad to engage the rigid insert to form a form-fitting connection so as to connect the pad in a fluid-tight manner to the outer surface portion. Preferably, the method comprises arranging a fluid tight seal between the rigid insert and the bottom surface of the recess of the rigid body. Preferably, the seal comprises an O-ring.

According to a third aspect, the present invention provides for a method for joining contacted surfaces of molded parts by electromagnetic welding. The method comprises providing a tooling according to any one of the above-described embodiments, pressurizing the pad of the tooling and applying pressure to the contacted surfaces. Further, the method comprises moving a joining inductor along the pressurized contacted surfaces of the molded parts, generating an electromagnetic field in an induction-sensitive component of the molded parts to heat a thermally activated coupling means of the molded parts to above a melting temperature of the coupling means, and joining the molded parts to each other in the contacted surfaces by the molten coupling means.

The advantage of the tooling resides in its way to apply pressure. The pressure is not only substantially uniform across the contacted surfaces, but pressure build-up may be limited or even zero on other parts of the molded parts. Such pressure build-up would otherwise create a force that could potentially push the tooling away from the molded part to be welded.

The pressure tooling may be used in any kind of electromagnetic welding process. A suitable method of electromagnetic welding of molded parts comprises providing a mold, placing at least two molded parts for coupling in the mold, wherein the surfaces brought in contact with each other (the contacted surfaces) between the molded parts comprise a thermally activated coupling means and an induction-sensitive component, activating the coupling means by heating the induction-sensitive component by means of an inductor, wherein the inductor may be situated outside the mold, and pressing the molded parts together in the configuration defined by the mold whereby the tooling is used, wherein the molded parts are coupled by the thermally activated coupling means.

An inductor typically comprises an electrical conductor which, under alternating voltage, generates an electromagnetic field. The shape of the electromagnetic field may be any known shape, such as coiled, or substantially cylindrical in a direction of welding. The use of a substantially cylindrical electromagnetic field in the welding direction enables very controlled, uniform and targeted heating, so that overheating is prevented as far as possible. Overheating may result in degradation of material, and thereby cause undesirable weakening of the construction. Other inductors comprise a plurality of windings, which produces a torus-shaped electromagnetic field. By using such a known inductor with the direction at right angles to the inductor as direction of induction, a heating pattern is created in which a relatively cold zone occurs in the center. The cylindrical electromagnetic field on the other hand produces a much more favorable heating profile which enables uniform heating. A cylindrical electromagnetic field can moreover be made very narrow, up to a width of 10-20 mm. **In** torus-shaped fields such a width cannot be realized in combination with the required heat-inducing power and penetration.

The electromagnetic field of the inductor may reach the contacted surfaces between the molded parts directly, through sections of the molded part(s), and/or through a wall of the mold. The invented method and tooling make it possible to realize a good-quality welded connection or joint between the molded parts in a rapid and efficient manner, without having to use sturdy and heavy tooling. The obtained joined product has a particularly good mechanical load-bearing capacity.

One or more molded parts are preferably manufactured from a thermoplastic material which can be welded by fusion, although it is also possible to envisage arranging a thermoplastic material or a thermally activated adhesive only on the contact surface between the molded parts as thermally activated coupling means.

Induction-sensitive components generally comprise an electrically conductive component such as a metal and/or carbon fiber. The mold and other components in the vicinity of the inductor which do not have to be heated are preferably substantially free of induction-sensitive components or are shielded from the induction field with a suitable shielding material.

The preferably thermoplastic molded parts are generally provided with an electrically conductive component, for instance metal gauze, or this component is arranged between the molded parts. Foucault currents or eddy currents are induced in the electrically conductive component by a fluctuating electromagnetic field which is generated by an inductor supplied with alternating current by a generator. Owing to several heating mechanisms like the Joule effect, fiber junction heating and dielectric hysteresis, these Foucault currents generate the heat required to melt the thermoplastic material and/or activate the coupling means. By moving the inductor along the contact surfaces the thermoplastic molded parts are mutually connected over their contact surface. The inductor can be guided over the contact surface for instance by means of a robot arm or linear guide, or any other moving means, in order to realize the connection.

For the purpose of heating, the induction-sensitive component must be in thermal contact with the thermally activated coupling means. This is for instance possible by mixing the induction-sensitive component and the coupling means.

An embodiment wherein the joining inductor is situated outside the mold and the electromagnetic field of the inductor reaches the contact surface between the molded parts through a wall of the mold, allows bringing the molded parts together under pressure by the mold during the welding. Other embodiments may apply pressure after the inductive heating of the molded parts for coupling has taken place.

Depending on the materials used, in particular the induction-sensitive component and the distance of the inductor from this component, a suitable power and frequency can be determined, as results from the sensing inductor response. The frequency determines inter alia the penetrative power of the electromagnetic field. The electric power of the inductor determines the strength of the fluctuating electromagnetic field and thereby the degree of heat generated in the induction-sensitive component.

It is advantageous if the thermally activated coupling means comprises a thermoplastic plastic. Thermoplastic plastics can be coupled in simple manner by fusion. Furthermore, it is easy to mix a thermoplastic plastic with an induction-sensitive component such as metal gauze or carbon fibers. Examples of particularly suitable thermoplastic plastics are polypropylene, polyamide, polyetherimide (PEI), polyetherketoneketone (PEKK), polyetheretherketone (PEEK) and polyphenylene sulfide (PPS), although the method is in principle suitable for any thermoplastic.

The component heatable by induction preferably comprises carbon fibers and/or a metal. These materials can be readily heated by induction and also have, in addition to electrical conduction, a good thermal conduction, whereby the generated heat is well distributed. Carbon fibers incorporated in a thermoplastic plastic are recommended because the carbon fibers also improve the material strength. In another preferred embodiment of the method the component heatable by induction comprises ferromagnetic or carbon nanoparticles.

It is possible for both the mold and the inductor to be stationary. This may for instance be appropriate for the coupling of a relatively small portion of the contact surfaces of the molded parts. In a preferred embodiment, the inductor is moved along a path relative to the contact surfaces such that the coupling means is activated in a predetermined part of the contact surfaces. It is also possible to hold the inductor stationary and to move the mold with the molded parts.

For application in the method according to the invention the inductor is connected to an alternating current generator, wherein the alternating current generator is electrically connected to the electrical connecting means of the inductor. Typical frequencies lie generally between 0.1 and 10 MHz.

In a further preferred embodiment, the induction part is provided with at least one feed channel adapted for passage of a cooling medium. The temperature of the induction part can hereby be held constant during use, this also being favorable for the electrical resistance of the inductor. The cooling medium is preferably a liquid such as water, with a high heat capacity. The induction part can for instance be a metal tube bent into the desired form, through which the cooling medium is pumped while an electromagnetic field is caused through the metal of the tube itself with an alternating voltage.

The embodiments of the invention described in this patent application can be combined in any possible combination of these embodiments, and each embodiment can individually form the subject-matter of a divisional patent application.

### BRIEF DESCRIPTION OF THE FIGURES

The invention will now be elucidated with reference to the following figures, without being limited thereto. **In** the figures:
- figure 1 schematically shows two molded parts to be coupled by a method according to the invention;
- figure 2 schematically shows an exemplary welding device;
- figures 3 and 4 show different perspective views of a preferred embodiment of a tooling according to the present invention;
- figures 5 to 9 schematically show cross-sectional side views of an electromagnetic welding setup, including the tooling shown in figures 3 and 4, at different stages of a process of electromagnetically welding composite parts; and
- figure 10 schematically shows composite parts joined using the electromagnetic welding setup shown in figures 5 to 9, in particular using the tooling shown in figures 3 to 9.

### DESCRIPTION OF EXEMPLARY EMBODIMENTS

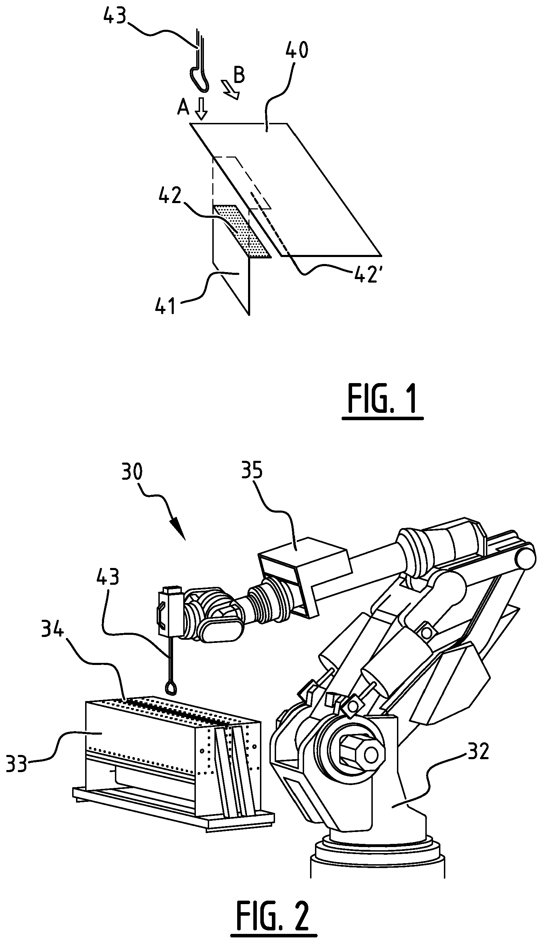

Figure 1 shows two molded parts 40 and 41 to be connected by electromagnetic welding. Both molded parts 40 and 41 may be manufactured from a thermoplastic polymer reinforced with carbon fibers, wherein the carbon fibers also serve as induction-sensitive component for heating of the thermoplastic polymer for the purpose of welding. A first molded part 40 is a flat part, while a second molded part 41 has a folded edge portion 42 which forms the intended contact surface for coupling between the molded parts 40 and 41. Obviously, other geometries of the molded parts may be used, and the invention is not limited to particular molded part geometries. The contact surfaces 42 and 42' are brought into contact with each other and a linear inductor 43, providing a substantial cylindrical electromagnetic field heats the molded parts 40 and 41, and in particular the contacted surfaces 42 and 42' to a temperature which is high enough to thermally activate the thermoplastic polymer, or, optionally, a thermally activated adhesive applied to the contact surfaces 42 and 42'. The inductor may be moved over the contacted surfaces 42 and 42' in the direction B without making physical contact with the parts 40 and 41. During heating and/or optionally a short time thereafter, the thermally activated contacted surfaces 42 and 42' must be pressed together in the direction A by appropriate tooling (not shown in figure 1) to obtain a well-developed and strong connection between the molded parts 40 and 41.

Figure 2 shows an exemplary welding device 30 provided with a joining inductor 43. The inductor 43 may be guided along a line of welding which may be a pre-programmed path by means of an industrial six-axis robot 32 or other suitable moving means, in order to achieve a desired weld. **In** this case, molded parts for welding may be fixed and pressed together in a mold 33, manufactured for this purpose. Mold 33 may be provided with a recess 34 through which the inductor 43 may be moved close to the molded parts for welding. The inductor 43 may be connected to an alternating current generator 35 arranged on robot 32 for the purpose of generating the electromagnetic field. The mold 33 is on the inside provided with tooling that is in contact with the contacted surfaces 42 and 42' to generate pressure onto the contacted surfaces 42 and 42'. This pressure is generated by inflating the tooling against the mold 33 inner surfaces.

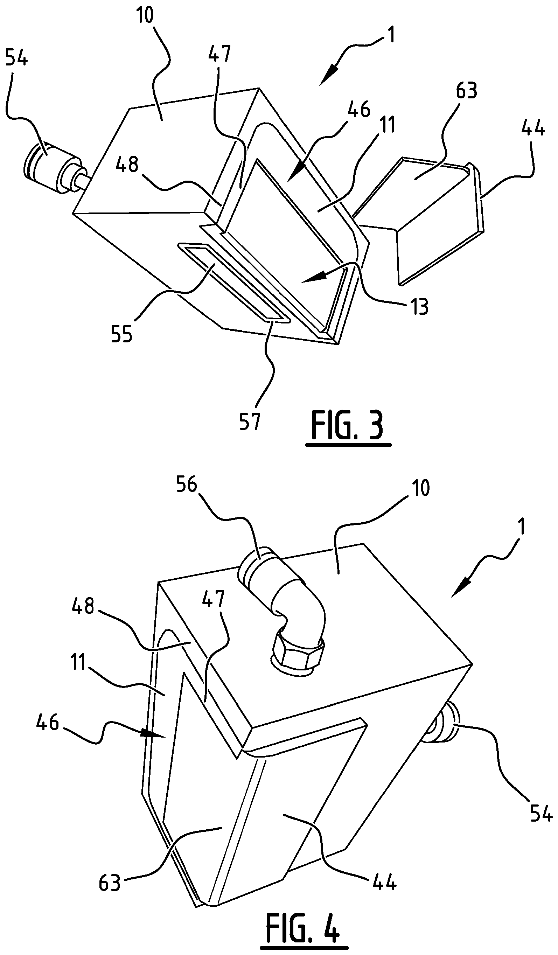

A tooling 1 according to an embodiment of the invention and to be inserted in an exemplary mold 33 is shown in figure 3. The tooling 1 comprises a rigid body 10 and a rubber body **11** arranged on one side thereon. The rubber body **11** is formed to fit inside a recess 12 of the rigid body 10. Specifically, the rubber body **11** is formed inside the recess 12 by casting molten rubber in the recess, which has subsequently solidified. The rubber of the rubber body **11** shown is silicone rubber, which is temperature resistant in the sense that the silicone rubber can withstand the heat generated during the electromagnetic welding process without melting. The recess 12 in the rigid body 10 prevents that the rubber body **11** may shift or stretch laterally when a force is applied perpendicular to the rubber body **11,** e.g., when the molded part 41 is pressed against the molded part 40 using the rubber body **11** which is pushed outwardly using fluid pressure generated by fluid pressure generating means (not shown).

Referring to inter alia figures 3 and 4, the rubber body **11** comprises a recessed portion or cavity 13, which is created using 3D-printed dummy part 44, in this case an L-profile with a folded edge portion 63, which corresponds to the molded part 41. Specifically, the folded edge portion 63 of the dummy part 44 is placed in the molten rubber during casting of the rubber body in the recess 12 of the rigid body 10 to create the cavity 13 in the rubber body **11** in which the folded edge portion 42 of the molded part 41 to be welded will fit. The cavity 13 created by the dummy part 44is thus dimensioned and formed such that it forms a counter form for a folded edge portion 42 of molded part 41.

Referring to figure 4, the depth of the cavity 13 in the rubber body **11** equals the thickness of the folded edge portion 63 of the dummy part 44. Since the folded edge portion 63 of the dummy part 44 is dimensioned equally as the folded edge portion 42 of the molded part 41, an outwardly facing surface 45 of the folded edge portion 42 part is coplanar with an outwardly facing surface 46 of a non-recessed portion of the rubber body **11** when the folded edge portion 42 is arranged in the cavity 13 of the rubber body **11.** Specifically, the rubber body **11** contains rubber around the outer contour 47 of the cavity 13, such that the folded edge portion 42 is surrounded, embedded as it were, by rubber. **In** this way, so-called squeeze-out of resin and/or fibers or the like of the molded part 41 is prevented during welding. Next to that, the outwardly facing surface 46 of the non-recessed portion of the rubber body 11 surrounding the cavity is coplanar with an outwardly facing surface 48 of a non-recessed portion of the outer face of the rigid body 10 surrounding the recess 12. This allows for placing the folded edge portion 42 of molded part 41 against molded part 40 while the folded edge portion 42 is embedded in the cavity 13 of the rubber body 11.

Inside the recess 12, a rigid insert 49 is present on a bottom surface of the recess 12. The outer edge of the rigid insert 49 is designed such that it ensures self-sealing and fixation of the rubber body 11. Specifically, the rubber body 11 comprises along its peripheral edge an inwardly extending lip portion 50 which engages a correspondingly formed outwardly extending lip portion 51 along the outer edge of the rigid insert. In this way, there is no need to further attach and seal the rubber body 11 after solidification of the molten rubber inside the recess 12. Furthermore, a fluid tight seal in the form of an O-ring 52 is arranged between the rigid insert 49 and the bottom surface of the recess 12 of the rigid body 10.

The recess 12 in the rigid body 10 forms a pressurization area in which the temperature resistant silicone rubber is cast. To pressurize the area, as a result of which the rubber body 11 is pushed outwardly with respect to the rigid insert 49, an internal channel 53 is arranged through the rigid insert 49 and the rigid body 10 from the pressurization area to a pressure tube connector 54 for connecting to a pump (not shown). For clamping the molded part 41 to the rigid body 10, a further internal channel is arranged through the rigid body 10 which extends between a vacuum chamber 55 arranged on a side surface of the rigid body 10 and a vacuum tube connector 56 for connecting to a vacuum pump (not shown). Vacuum tightness of the vacuum chamber 55 is ensured by a rubber seal 57 in a seal recess 58.

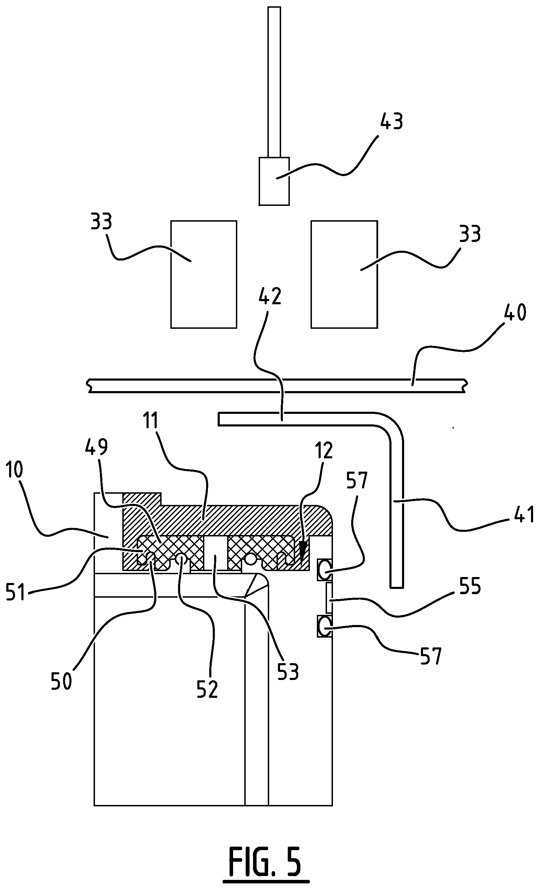

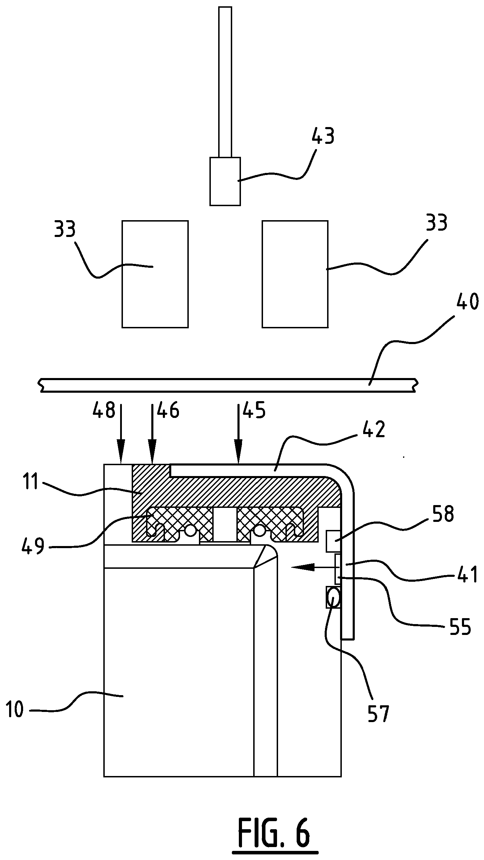

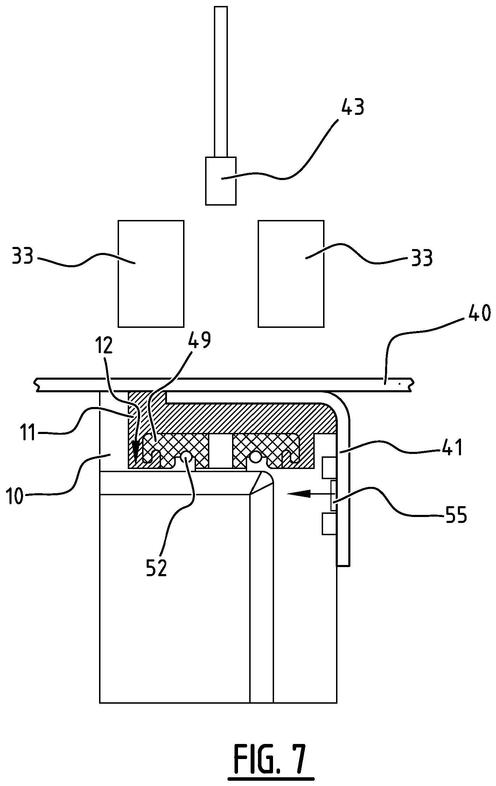

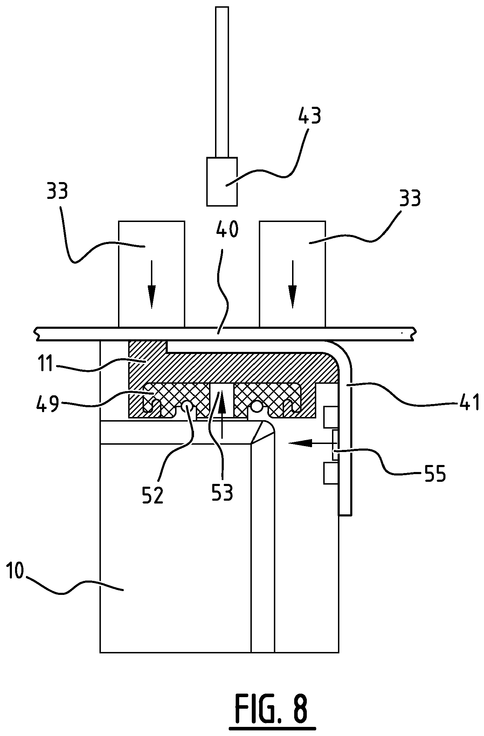

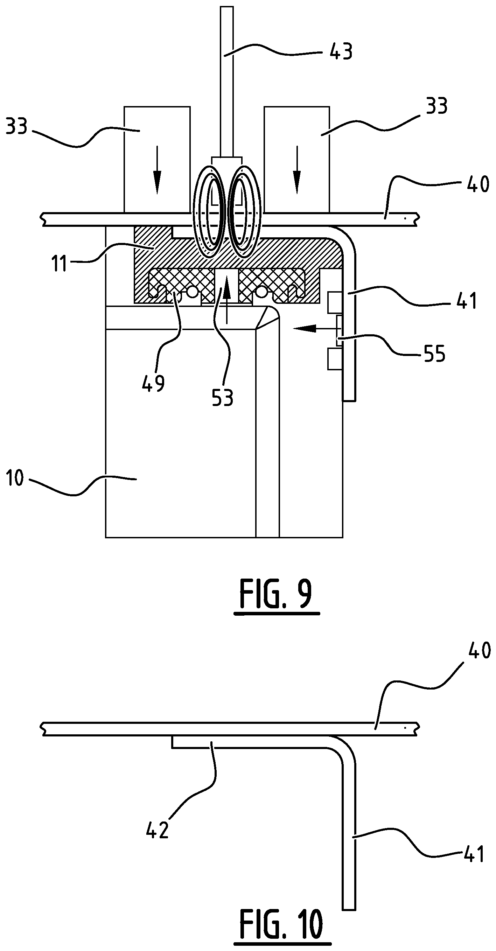

Figures 5 to 9 schematically show cross-sectional side views of an electromagnetic welding setup, including the tooling 1, the mold 33 and the inductor 43, at different stages of a process of electromagnetically welding molded parts 40 and 41. In figure 6, molded part 41 is placed inside cavity 13 of the rubber body 11. At the same time, a vacuum is generated in the vacuum chamber 55 to keep molded part 41 in place. Subsequently, molded part 40 is placed against the outwardly facing surface 45 of molded part 41 (see figure 7). To keep the molded parts 40 and 41 into contact with each other, mold 33 is placed against molded part 40. Next, fluid pressure generating means build up pressure below the rubber body 11 to push the rubber body 11 outwardly relative to the upper surface of the rigid insert 49 so as to apply pressure to the contacted surfaces of molded parts 40 and 41. While keeping pressure on molded parts 40 and 41, the inductor 43 is guided along a welding line across the contacted surfaces in order to join the contacted surfaces of molded parts 40 and 41. The final result is that molded parts 40 and 41 are joined together, as shown in figure 10.

The invention is not limited to the above given examples and variations thereto may be envisaged within the scope of the appended claims.

## Claims

1. Tooling (1) for use in a method for joining contacted surfaces (42, 42') of molded parts (40, 41) by electromagnetic welding, the tooling (1) comprising:
a rigid body (10); and
a pad (11) of elastomeric material arranged on an outer surface portion of the rigid body (10),
a peripheral edge of the pad (11) being attached to the outer surface portion of the rigid body (10), and
the rigid body (10) comprising a channel (53) fluidly communicating a space between the rigid body (10) and the pad (11) with an outlet of fluid pressure generating means to be connected to the channel (53) to build up pressure in the space and thereby increase the volume of the space and push the pad (11) outwardly relative to the outer surface portion of the rigid body (10) so as to apply pressure to the contacted surfaces (42, 42') using the tooling (1),
**characterized in that** the peripheral edge of the pad (11) and an outer edge of the outer surface portion of the rigid body (10) are configured to engage each other to form a form-fitting connection so as to connect the pad (11) in a fluid-tight manner to the outer surface portion.

2. Tooling (1) according to claim 1, wherein the peripheral edge of the pad (11) and an outer edge of the outer surface portion of the rigid body (10) are configured to be detachably connected to each other, such that a connection between the pad (11) near its peripheral edge and the outer surface portion of the rigid body (10) is fluid-tight, at least when the fluid pressure generating means push the pad (11) outwardly relative to the outer surface portion of the rigid body (10).

3. Tooling (1) according to claim 1 or 2, wherein the pad (11) is configured along its peripheral edge such that it enfolds the outer edge of the outer surface portion of the rigid body (10).

4. Tooling (1) according to claim 3, wherein the pad (11) comprises along its peripheral edge an inwardly extending lip portion (50) which engages a correspondingly formed outwardly extending lip portion (51) along the outer edge of the outer surface portion of the rigid body (10).

5. Tooling (1) according to any one of the preceding claims, wherein the outer surface portion comprises a recess (12) in an outer face of the rigid body (10), which recess (12) is dimensioned and formed such that it forms a counter form for the pad (11), wherein the pad (11) is arranged in the recess (12) and wherein, optionally, an outwardly facing surface (46) of the pad (11) is coplanar with an outwardly facing surface (48) of a non-recessed portion of the outer face of the rigid body (10).

6. Tooling (1) according to any one of the preceding claims, wherein the pad (11) comprises a recessed portion (13) which is dimensioned and formed such that it forms a counter form for a portion of one of the molded parts (40, 41), said portion of one of the molded parts (40, 41) comprising one of the contacted surfaces (42, 42'), and wherein optionally a depth of the recessed portion (13) of the pad (11) equals the thickness of said portion of one of the molded parts (40, 41), such that an outwardly facing surface (45) of said portion of one of the molded parts (40, 41) is coplanar with an outwardly facing surface (46) of a non-recessed portion of the pad (11).

7. Tooling (1) according any one of claims 5 and 6, wherein the outer surface portion of the rigid body (10) comprises an outer surface of a rigid insert (49) arranged on a bottom surface of the recess of the rigid body (10), and wherein, optionally, the peripheral edge of the pad (11) and an outer edge of the rigid insert (49) are configured to engage each other to form a form-fitting connection so as to connect the pad (11) in a fluid-tight manner to the outer surface portion, and wherein, optionally, a fluid tight seal (52) is arranged between the rigid insert (49) and the bottom surface of the recess of the rigid body (10).

8. Tooling (1) according to any one of claims 1 to 7, the rigid body (10) further comprising a vacuum chamber (55) fluidly communicating an exterior of the rigid body (10) with an inlet of vacuum suction means to be connected to the vacuum chamber (55), the vacuum chamber (55) being spatially separated from the pad (11) and configured to create a vacuum, using the vacuum suction means, between rigid body (10) and one of the molded parts (40, 41) so as to fixate said one of the molded parts (40, 41) onto the rigid body (10).

9. Tooling (1) according to any one of claims 1 to 8, further comprising a mechanical fixation member configured for mechanically fixing said one of the molded parts (40, 41) onto the rigid body (10).

10. Tooling (1) according to any one of the preceding claims, wherein the pad (11) has a substantially uniform thickness.

11. Tooling (1) according to any one of the preceding claims, wherein the elastomeric material comprises polymerized siloxane.

12. Tooling (1) according to any one of the preceding claims, wherein the fluid pressure generating means comprise air pressure generating means.

13. Tooling (1) according to any one of the preceding claims, wherein the rigid body (10) is made from a polymeric material.

14. Tooling (1) according to any one of the preceding claims, further comprising at least one of a pressure sensor and a temperature sensor configured to measure at least one of a pressure and a temperature, respectively, applied to the contacted surfaces (42, 42').

15. Method for joining contacted surfaces (42, 42') of molded parts (40, 41) by electromagnetic welding, the method comprising moving a joining inductor (43) along the contacted surfaces (42, 42') of the molded parts (40, 41), generating an electromagnetic field in an induction-sensitive component of the molded parts (40, 41) to heat a thermally activated coupling means of the molded parts (40, 41) to above a melting temperature of the coupling means, and joining the molded parts (40, 41) to each other in the contacted surfaces (42, 42') by the molten coupling means, **characterized in that** the method further comprises providing a tooling (1) according to any one of claims 1 to 14, pressurizing the pad (11) of the tooling (1) and applying pressure to the contacted surfaces (42, 42').

## Patentansprüche

1. Werkzeug (1) zur Verwendung in einem Verfahren zum Vereinen kontaktierter Oberflächen (42, 42') von Formteilen (40, 41) durch elektromagnetisches Schweißen, das Werkzeug (1) umfassend:
einen starren Körper (10); und
ein Polster (11) aus elastomerem Material, angeordnet auf einem Abschnitt der Außenoberfläche des starren Körpers (10),
einen Umfangsrand des Polsters (11), befestigt an dem Abschnitt der Außenoberfläche des starren Körpers (10), und
der starre Körper (10) umfassend einen Kanal (53), der einen Raum zwischen dem starren Körper (10) und dem Polster (11) mit einem Auslass von Fluiddruckerzeugungsmitteln fluidisch verbindet, die mit dem Kanal (53) zu verknüpfen sind, um Druck in dem Raum aufzubauen und dadurch das Volumen des Raums zu vergrößern und das Polster (11) relativ zu dem Abschnitt der Außenoberfläche des starren Körpers (10) nach außen zu drücken, um unter Verwendung des Werkzeugs (1) Druck auf die kontaktierten Oberflächen (42, 42') auszuüben,
**dadurch gekennzeichnet, dass** der Umfangsrand des Polsters (11) und ein Außenrand des Abschnitts der Außenoberfläche des starren Körpers (10) konfiguriert sind, um ineinander zu greifen, um eine formschlüssige Verknüpfung zu bilden, um das Polster (11) fluiddicht mit dem Abschnitt der Außenoberfläche zu verknüpfen.

2. Werkzeug (1) nach Anspruch 1, wobei der Umfangsrand des Polsters (11) und ein Außenrand des Abschnitts der Außenoberfläche des starren Körpers (10) konfiguriert sind, um lösbar miteinander verknüpft zu werden, sodass eine Verknüpfung zwischen dem Polster (11) nahe seinem Umfangsrand und dem Abschnitt der Außenoberfläche des starren Körpers (10) fluiddicht ist, zumindest wenn die Fluiddruckerzeugungsmittel das Polster (11) relativ zu dem Abschnitt der Außenoberfläche des starren Körpers (10) nach außen drücken.

3. Werkzeug (1) nach Anspruch 1 oder 2, wobei das Polster (11) entlang seines Umfangsrands konfiguriert ist, um den Außenrand des Abschnitts der Außenoberfläche des starren Körpers (10) zu umschließen.

4. Werkzeug (1) nach Anspruch 3, wobei das Polster (11) entlang seines Umfangsrands einen sich nach innen erstreckenden Lippenabschnitt (50) umfasst, der in einen entsprechend gebildeten, sich nach außen erstreckenden Lippenabschnitt (51) entlang dem Außenrand des Abschnitts der Außenoberfläche des starren Körpers (10) eingreift.

5. Werkzeug (1) nach einem der vorstehenden Ansprüche, wobei der Abschnitt der Außenoberfläche eine Aussparung (12) in einer Außenfläche des starren Körpers (10) umfasst, wobei die Aussparung (12) so dimensioniert und geformt ist, dass sie eine Gegenform zu dem Polster (11) bildet, wobei das Polster (11) in der Aussparung (12) angeordnet ist und wobei, optional, eine nach außen weisende Oberfläche (46) des Polsters (11) koplanar mit einer nach außen weisenden Oberfläche (48) eines nicht ausgesparten Abschnitts der Außenfläche des starren Körpers (10) ist.

6. Werkzeug (1) nach einem der vorstehenden Ansprüche, wobei das Polster (11) einen ausgesparten Abschnitt (13) umfasst, der so dimensioniert und ausgebildet ist, dass er eine Gegenform zu einem Abschnitt eines der Formteile (40, 41) bildet, der Abschnitt eines der Formteile (40, 41) umfassend eine der kontaktierten Oberflächen (42, 42'), und wobei optional eine Tiefe des ausgesparten Abschnitts (13) des Polsters (11) gleich der Dicke des Abschnitts eines der Formteile (40, 41) ist, sodass eine nach außen weisende Oberfläche (45) des Abschnitts eines der Formteile (40, 41) koplanar mit einer nach außen weisenden Oberfläche (46) eines nicht ausgesparten Abschnitts des Polsters (11) ist.

7. Werkzeug (1) nach einem der Ansprüche 5 und 6, wobei der Abschnitt der Außenoberfläche des starren Körpers (10) eine Außenoberfläche eines starren Einsatzes (49) umfasst, der an einer Bodenoberfläche der Aussparung des starren Körpers (10) angeordnet ist, und wobei, optional, der Umfangsrand des Polsters (11) und ein Außenrand des starren Einsatzes (49) konfiguriert sind, um ineinander zu greifen, um eine formschlüssige Verknüpfung zu bilden, um das Polster (11) fluiddicht mit dem Abschnitt der Außenoberfläche zu verknüpfen, und wobei, optional, eine fluiddichte Dichtung (52) zwischen dem starren Einsatz (49) und der Bodenoberfläche der Aussparung des starren Körpers (10) angeordnet ist.

8. Werkzeug (1) nach einem der Ansprüche 1 bis 7, der starre Körper (10) ferner umfassend eine Vakuumkammer (55), die eine Außenseite des starren Körpers (10) mit einem Einlass von Vakuumsaugmitteln, die mit der Vakuumkammer (55) zu verknüpfen sind, fluidisch verbindet, wobei die Vakuumkammer (55) räumlich von dem Polster (11) getrennt und konfiguriert ist, um unter Verwendung der Vakuumsaugmittel ein Vakuum zwischen dem starren Körper (10) und einem der Formteile (40, 41) zu schaffen, um das eine der Formteile (40, 41) an dem starren Körper (10) zu fixieren.

9. Werkzeug (1) nach einem der Ansprüche 1 bis 8, ferner umfassend ein mechanisches Fixierungselement, das zum mechanischen Fixieren des einen der Formteile (40, 41) an dem starren Körper (10) konfiguriert ist.

10. Werkzeug (1) nach einem der vorstehenden Ansprüche, wobei das Polster (11) eine im Wesentlichen gleichmäßige Dicke aufweist.

11. Werkzeug (1) nach einem der vorstehenden Ansprüche, wobei das elastomere Material polymerisiertes Siloxan umfasst.

12. Werkzeug (1) nach einem der vorstehenden Ansprüche, wobei die Fluiddruckerzeugungsmittel Luftdruckerzeugungsmittel umfassen.

13. Werkzeug (1) nach einem der vorstehenden Ansprüche, wobei der starre Körper (10) aus einem Polymermaterial hergestellt ist.

14. Werkzeug (1) nach einem der vorstehenden Ansprüche, ferner umfassend mindestens einen von einem Drucksensor und einem Temperatursensor, die konfiguriert sind, um jeweils mindestens eines von einem Druck und einer Temperatur zu messen, die auf die kontaktierten Oberflächen (42, 42') ausgeübt werden.

15. Verfahren zum Vereinen kontaktierter Oberflächen (42, 42') von Formteilen (40, 41) durch elektromagnetisches Schweißen, das Verfahren umfassend das Bewegen eines Vereinungsinduktors (43) entlang der kontaktierten Oberflächen (42, 42') der Formteile (40, 41), das Erzeugen eines elektromagnetischen Feldes in einer induktionsempfindlichen Komponente der Formteile (40, 41), um ein thermisch aktiviertes Kupplungsmittel der Formteile (40, 41) auf über eine Schmelztemperatur des Kupplungsmittels zu erhitzen, und das Vereinigen der Formteile (40, 41) miteinander in den kontaktierten Oberflächen (42, 42') durch das geschmolzene Kupplungsmittel, **dadurch gekennzeichnet, dass** das Verfahren ferner das Bereitstellen eines Werkzeugs (1) nach einem der Ansprüche 1 bis 14, das Unterdrucksetzen des Polsters (11) des Werkzeugs (1) und das Ausüben von Druck auf die kontaktierten Oberflächen (42, 42') umfasst.

## Revendications

1. Outillage (1) destiné à être utilisé dans un procédé d'assemblage de surfaces mises en contact (42, 42') de pièces moulées (40, 41) par soudage électromagnétique, l'outillage (1) comprenant :
un corps rigide (10) ; et
un tampon (11) en matériau élastomère disposé sur une partie de surface extérieure du corps rigide (10),
un bord périphérique du tampon (11) étant fixé à la partie de surface extérieure du corps rigide (10), et
le corps rigide (10) comprenant un canal (53) mettant en communication fluidique un espace entre le corps rigide (10) et le tampon (11) avec une sortie de moyens de génération de pression de fluide à relier au canal (53) pour accumuler une pression dans l'espace et de ce fait augmenter le volume de l'espace et pousser le tampon (11) vers l'extérieur par rapport à la partie de surface extérieure du corps rigide (10) de manière à appliquer une pression sur les surfaces mises en contact (42, 42') à l'aide de l'outillage (1),
**caractérisé en ce que** le bord périphérique du tampon (11) et un bord extérieur de la partie de surface extérieure du corps rigide (10) sont conçus pour venir en prise l'un avec l'autre afin de former une liaison par complémentarité de formes de manière à relier le tampon (11) à la partie de surface extérieure de manière étanche aux fluides.

2. Outillage (1) selon la revendication 1, dans lequel le bord périphérique du tampon (11) et un bord extérieur de la partie de surface extérieure du corps rigide (10) sont conçus pour être reliés de manière détachable l'un à l'autre, de telle sorte qu'une liaison entre le tampon (11) près de son bord périphérique et la partie de surface extérieure du corps rigide (10) est étanche aux fluides, au moins lorsque les moyens de génération de pression de fluide poussent le tampon (11) vers l'extérieur par rapport à la partie de surface extérieure du corps rigide (10).

3. Outillage (1) selon la revendication 1 ou 2, dans lequel le tampon (11) est conçu le long de son bord périphérique de telle sorte qu'il enveloppe le bord extérieur de la partie de surface extérieure du corps rigide (10).

4. Outillage (1) selon la revendication 3, dans lequel le tampon (11) comprend le long de son bord périphérique une partie lèvre (50) s'étendant vers l'intérieur qui vient en prise avec une partie lèvre (51) s'étendant vers l'extérieur formée de manière correspondante le long du bord extérieur de la partie de surface extérieure du corps rigide (10).

5. Outillage (1) selon l'une quelconque des revendications précédentes, dans lequel la partie de surface extérieure comprend un évidement (12) dans une face extérieure du corps rigide (10), lequel évidement (12) est dimensionné et formé de telle sorte qu'il forme une contre-forme pour le tampon (11), dans lequel le tampon (11) est disposé dans l'évidement (12) et dans lequel, éventuellement, une surface orientée vers l'extérieur (46) du tampon (11) est coplanaire avec une surface orientée vers l'extérieur (48) d'une partie non évidée de la face extérieure du corps rigide (10).

6. Outillage (1) selon l'une quelconque des revendications précédentes, dans lequel le tampon (11) comprend une partie évidée (13) qui est dimensionnée et formée de telle sorte qu'elle forme une contre-forme pour une partie de l'une des pièces moulées (40, 41), ladite partie de l'une des pièces moulées (40, 41) comprenant l'une des surfaces en mises en contact (42, 42'), et dans lequel éventuellement une profondeur de la partie évidée (13) du tampon (11) est égale à l'épaisseur de ladite partie de l'une des pièces moulées (40, 41), de telle sorte qu'une surface orientée vers l'extérieur (45) de ladite partie de l'une des pièces moulées (40, 41) est coplanaire avec une surface orientée vers l'extérieur (46) d'une partie non évidée du tampon (11).

7. Outillage (1) selon l'une quelconque des revendications 5 et 6, dans lequel la partie de surface extérieure du corps rigide (10) comprend une surface extérieure d'un insert rigide (49) disposée sur une surface inférieure de l'évidement du corps rigide (10), et dans lequel, éventuellement, le bord périphérique du tampon (11) et un bord extérieur de l'insert rigide (49) sont conçus pour venir en prise l'un avec l'autre afin de former une liaison par complémentarité de formes de manière à relier le tampon (11) à la partie de surface extérieure de manière étanche aux fluides, et dans lequel, éventuellement, un joint étanche aux fluides (52) est disposé entre l'insert rigide (49) et la surface inférieure de l'évidement du corps rigide (10).

8. Outillage (1) selon l'une quelconque des revendications 1 à 7, le corps rigide (10) comprenant en outre une chambre à vide (55) mettant en communication fluidique l'extérieur du corps rigide (10) avec une entrée de moyens d'aspiration à vide devant être reliés à la chambre à vide (55), la chambre à vide (55) étant séparée spatialement du tampon (11) et conçue pour créer un vide, à l'aide des moyens d'aspiration à vide, entre le corps rigide (10) et l'une des pièces moulées (40, 41) de manière à fixer ladite une des pièces moulées (40, 41) sur le corps rigide (10).

9. Outillage (1) selon l'une quelconque des revendications 1 à 8, comprenant en outre un élément de fixation mécanique conçu pour fixer mécaniquement ladite une des pièces moulées (40, 41) sur le corps rigide (10).

10. Outillage (1) selon l'une quelconque des revendications précédentes, dans lequel le tampon (11) a une épaisseur sensiblement uniforme.

11. Outillage (1) selon l'une quelconque des revendications précédentes, dans lequel le matériau élastomère comprend un siloxane polymérisé.

12. Outillage (1) selon l'une quelconque des revendications précédentes, dans lequel les moyens de génération de pression de fluide comprennent des moyens de génération de pression d'air.

13. Outillage (1) selon l'une quelconque des revendications précédentes, dans lequel le corps rigide (10) est constitué d'un matériau polymère.

14. Outillage (1) selon l'une quelconque des revendications précédentes, comprenant en outre au moins l'un parmi un capteur de pression et un capteur de température conçus pour mesurer au moins l'une parmi une pression et une température, respectivement, appliquées aux surfaces mises en contact (42, 42').

15. Procédé d'assemblage de surfaces mises en contact (42, 42') de pièces moulées (40, 41) par soudage électromagnétique, le procédé comprenant le déplacement d'un inducteur d'assemblage (43) le long des surfaces mises en contact (42, 42') des pièces moulées (40, 41), la génération d'un champ électromagnétique dans un composant sensible à l'induction des pièces moulées (40, 41) pour chauffer un moyen d'accouplement activé thermiquement des pièces moulées (40, 41) à une température supérieure à une température de fusion du moyen d'accouplement, et l'assemblage des pièces moulées (40, 41) l'une à l'autre dans les surfaces mises en contact (42, 42') par le moyen d'accouplement fondu, **caractérisé en ce que** le procédé comprend en outre la fourniture d'un outillage (1) selon l'une quelconque des revendications 1 à 14, la mise sous pression du tampon (11) de l'outillage (1) et l'application de pression sur les surfaces mises en contact (42, 42').
